# FASCICULE DE BREVET EUROPEEN

(11) **EP 0 702 481 B1**
(45) Date de publication et mention de la délivrance du brevet: **17.11.1999**
(21) Numéro de dépôt: 95410099.6
(22) Date de dépôt: 08.09.1995
(51) Int. Cl.: H04N 1/327, H04L 1/20

(54) **Détecteur de perte de porteuse dans un modem de télécopieur**
Detektor für Trägerverlust in einem Faksimile-Modem
Loss of carrier detector in a facsimile modem

(30) Priorité: 14.09.1994 FR 9411212
(43) Date de publication de la demande: 20.03.1996
(73) Titulaire: STMicroelectronics S.A., 94250 Gentilly (FR)
(72) Inventeur: Glass, William, F-38170 Seyssinet Pariset (FR)
(74) Mandataire: de Beaumont, Michel

(56) Documents cités:
- WO-A-92/21193
- GB-A- 2 275 395
- PATENT ABSTRACTS OF JAPAN vol. 018 no. 218 (E-1539) ,19 Avril 1994 & JP-A-06 014062 (MITSUBISHI ELECTRIC CORP) 21 Janvier 1994,
- PATENT ABSTRACTS OF JAPAN vol. 012 no. 207 (E-621) ,14 Juin 1988 & JP-A-63 006935 (TOSHIBA CORP) 12 Janvier 1988,

## Description

La présente invention concerne le domaine des modulateurs/démodulateurs (modems) numériques et plus particulièrement l'opération de détection de perte de porteuse dans un modem utilisé pour la transmission de télécopies.

Dans un modem utilisant un processeur de signal, les données à transmettre sont codées sous forme numérique à partir d'un certain nombre de symboles possibles puis transmises sous forme d'échantillons de portions d'une porteuse modulée, par exemple, en phase et en amplitude, puis convertis en signal analogique.

Dans le cas des télécopieurs, les modems fonctionnent en mode bidirectionnel à l'alternat (semi-duplex) et sont susceptibles d'émettre et de recevoir des signaux correspondant à deux types de modulation. Une modulation en phase et en amplitude (QAM) ou une modulation différentielle de phase (DPH) d'une porteuse est utilisée pour la transmission des données. Une modulation par saut de fréquence (couramment appelée modulation FSK d'après l'expression anglo-saxonne Frequency Shift Keying) est utilisée pour échanger des informations sur la communication, en particulier, pour accuser réception de chaque page du document transmis par télécopie. La commutation d'une modulation QAM ou DPH vers une modulation FSK doit donc se produire à chaque fin de page du document transmis par télécopie. La détection d'une fin de page passe par la détection de la perte de la porteuse de la modulation QAM ou DPH.

On utilise, côté récepteur, le niveau du signal reçu pour détecter la perte de porteuse. Un détecteur indique par une sortie à deux états, respectivement ON et OFF, la perte de la porteuse qui se caractérise par une atténuation du niveau du signal reçu.

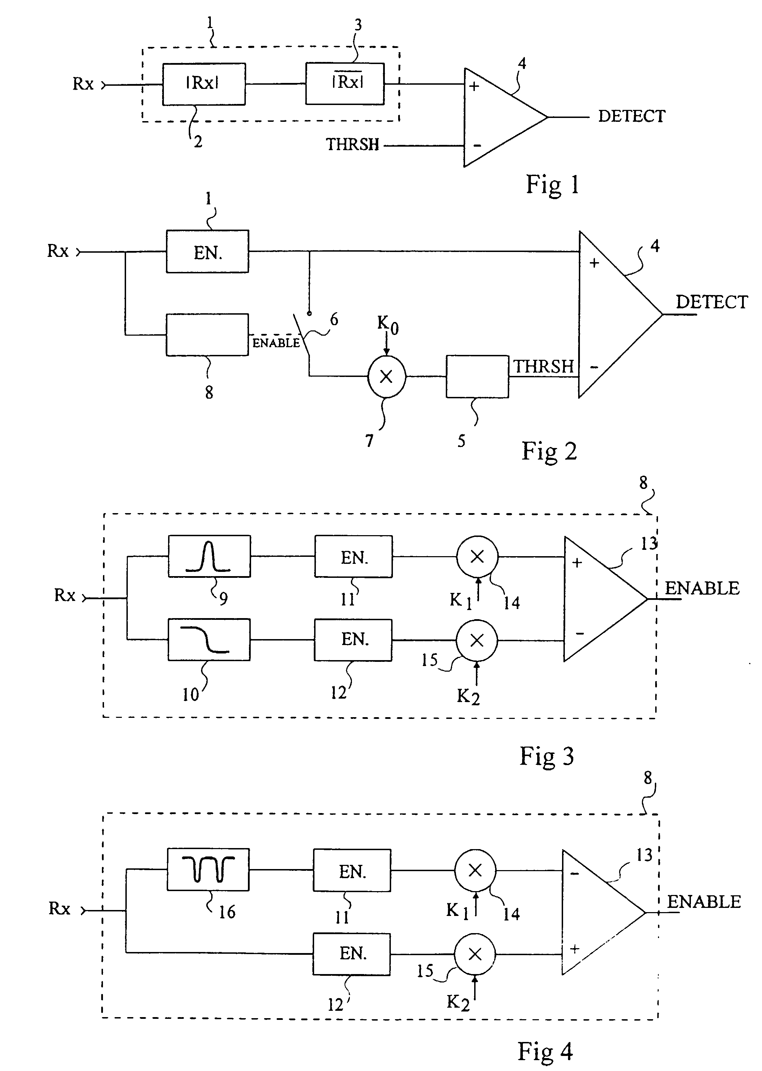

La figure 1 représente un exemple de détecteur de perte de porteuse classique. Ce détecteur comporte un calculateur 1 du niveau du signal reçu comprenant un circuit 2 de détermination de valeur absolue (fournissant la valeur absolue de l'amplitude du signal reçu Rx) dont la sortie est envoyée sur un moyenneur 3 constitué d'un filtre passe-bas récursif du premier ordre à fréquence de coupure nulle. Le signal Rx reçu par le calculateur 1 correspond au signal reçu par le modem après numérisation. Le moyenneur 3 sert à lisser les ondulations à la sortie du circuit 2 ainsi qu'à éviter une commutation intempestive du détecteur. Un comparateur 4 du détecteur reçoit, sur une entrée positive, la sortie du moyenneur 3 qui constitue la sortie du calculateur 1. Une entrée négative du comparateur 4 reçoit une valeur seuil prédéterminée THRSH à laquelle le niveau du signal reçu doit être comparée. La sortie du comparateur 4 délivre un signal de détection DETECT à deux états (ON ou OFF) indiquant la présence ou l'absence d'une porteuse.

Un inconvénient de ce type de détecteur est que les caractéristiques de la ligne de transmission entre deux modems peuvent faire varier, de manière sensible, le niveau du signal reçu. Ces variations de niveau du signal reçu peuvent être comprises, par exemple, entre 0 dBm et -48 dBm. En utilisant, par exemple, pour le seuil THRSH, un niveau de -24 dBm, tout signal reçu d'un niveau inférieur à -24 dBm sera interprété comme une perte de porteuse. A l'inverse, si du bruit est mélangé au signal, le détecteur peut ne pas détecter la perte de porteuse.

Le document JP-A-06 014062 décrit un autre exemple de détecteur de perte de porteuse utilisant un seuil mémorisé sur la base de l'énergie du signal reçu. Un tel détecteur est particulièrement complexe et nécessite des moyens additionnels pour commander la mémorisation du seuil d'énergie. De plus, il ne permet pas une adaptation d'un modem existant pourvu d'un détecteur tel que représenté à la figure 1 sans entraîner de modifications importantes du récepteur du modem. Un autre inconvénient d'un tel détecteur est qu'il est susceptible d'engendrer des erreurs de détection en raison du temps de réponse du filtre (passe-bande) utilisé.

La présente invention vise à pallier ces inconvénients en proposant un détecteur de perte de porteuse qui soit à la fois rapide et fiable.

Le document WO-A-92/21193 décrit un autre détecteur de perte de porteuse qui utilise la moyenne des valeurs d'amplitude du signal reçu pour en déterminer un seuil adaptatif de détection de perte de porteuse.

L'invention vise également à proposer un tel détecteur qui puisse s'adapter à un détecteur de perte de porteuse et/ou à un modem existant sans entraîner de modifications importantes du récepteur du modem.

Pour atteindre ces objets, la présente invention prévoit un détecteur de perte de porteuse dans un modem récepteur d'une transmission d'un document par télécopie, comportant :
un premier calculateur d'amplitude du signal reçu,
un premier comparateur de cette amplitude par rapport à un seuil, et
des moyens pour réaliser une adaptation dudit seuil entre chaque page du document transmis.

Selon un mode de réalisation de la présente invention, lesdits moyens comportent un registre de mémorisation d'un seuil qui correspond à un niveau d'amplitude du signal reçu pendant une séquence de signaux déterminés et un commutateur destiné à commander la mémorisation de l'amplitude du signal reçu issu du premier calculateur à l'apparition de la séquence de signaux déterminés, ladite séquence étant choisie pour présenter des signaux d'amplitude calibrée.

Selon un mode de réalisation de la présente invention, le niveau d'amplitude devant être mémorisé est affecté d'un coefficient, inférieur à l'unité, au moyen d'un premier multiplieur intercalé entre une sortie du premier calculateur et une entrée de mémorisation du registre.

Selon un mode de réalisation de la présente invention, la valeur du coefficient multiplicateur est choisie pour que la valeur du seuil mémorisé soit atténuée, par rapport à la sortie du premier calculateur, d'une valeur correspondant au moins à l'amplitude maximale d'ondulations que peut présenter la sortie du premier calculateur.

Selon un mode de réalisation de la présenté invention, le détecteur est associé à un dispositif d'identification de la séquence de signaux déterminés qui délivre un signal de commande audit commutateur, ladite séquence possédant un spectre fréquentiel de deux fréquences déterminées.

Selon un mode de réalisation de la présente invention, ledit dispositif d'identification comporte un filtre passe-bande, associé à un second calculateur d'amplitude dont une sortie est envoyée, par l'intermédiaire d'un second multiplieur, sur une première entrée d'un second comparateur, et un filtre passe-bas, associé à un troisième calculateur d'amplitude dont une sortie est envoyée, par l'intermédiaire d'un troisième multiplieur, sur une seconde entrée du second comparateur.

Selon un mode de réalisation de la présente invention, ledit dispositif d'identification comporte un filtre coupe-bandes, associé à un second calculateur d'amplitude dont une sortie est envoyée sur une première entrée d'un second comparateur, une seconde entrée du second comparateur recevant la sortie d'un troisième calculateur d'amplitude dont l'entrée reçoit, directement, ledit signal reçu.

Selon un mode de réalisation de la présente invention, un multiplieur, par un coefficient prédéterminé, est intercalé entre la sortie de chaque calculateur du dispositif d'identification et l'entrée du second comparateur à laquelle ledit calculateur est associé.

Selon un mode de réalisation de la présente invention, le coefficient du multiplieur associé au second calculateur est supérieur au coefficient du multiplieur associé au troisième calculateur.

Selon un mode de réalisation de la présente invention, chaque calculateur d'amplitude comprend un circuit de détermination de la valeur absolue de l'amplitude du signal reçu et, constituant un moyenneur, un filtre numérique passe-bas récursif du premier ordre à fréquence de coupure nulle.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
la figure 1 décrite précédemment est destinée à exposer l'état de la technique et le problème posé ;
la figure 2 représente un mode de réalisation d'un détecteur de perte de porteuse selon l'invention ;
la figure 3 représente un mode de réalisation d'un circuit de commande d'un commutateur de mémorisation du seuil du détecteur de la figure 2 ; et
la figure 4 représente une variante du mode de réalisation du circuit de commande représenté à la figure 3.

Un détecteur de perte de porteuse selon l'invention, tel que représenté à la figure 2, comporte un comparateur 4 du niveau du signal reçu Rx, qui lui est fourni sur une entrée positive par un calculateur d'amplitude 1 constitué d'un circuit de détermination de la valeur absolue de l'amplitude du signal reçu et d'un moyenneur. Selon l'invention, on préfère utiliser un calculateur d'amplitude qui présente l'avantage d'une mise en oeuvre plus facile qu'un calculateur d'énergie élevant au carré le niveau du signal reçu. Le comparateur 4 reçoit, sur son entrée négative, une valeur seuil THRSH issue d'un registre 5.

Comme le montre la figure 2, le détecteur de perte de porteuse selon l'invention se distingue du détecteur classique représenté à la figure 1 par la présence d'un commutateur 6 chargé de provoquer périodiquement l'enregistrement, dans le registre 5, du niveau présent en sortie du calculateur d'amplitude 1, affecté d'un coefficient K0 au moyen d'un multiplieur 7.

La position de repos du commutateur 6 est la position représentée à la figure 2.

Une caractéristique de la présente invention est que le seuil THRSH et le niveau courant du signal reçu sont, tous deux, obtenus au moyen d'un même calculateur d'amplitude 1. Ainsi, le fonctionnement d'un détecteur selon l'invention n'est pas altéré par des dérives éventuelles du fonctionnement du calculateur, dans la mesure où de telles dérives ne risquent pas de provoquer de divergences entre le calcul du seuil et du niveau courant. De plus, cela rend le fonctionnement du détecteur indépendant des tolérances de fabrication du calculateur. Ce qui n'est pas le cas de détecteurs (par exemple, un détecteur tel que décrit dans le document JP-A-06 014062) qui utilisent des calculateurs séparés pour obtenir le seuil et le niveau courant.

Un avantage de la présente invention est que le détecteur prend en compte le bruit, susceptible d'être mélangé au signal reçu, pour la détermination du seuil et du niveau courant d'amplitude.

Périodiquement pendant la communication, le seuil THRSH est adapté en prenant, pour nouvelle valeur, l'amplitude du signal reçu Rx pendant une séquence déterminée qui est choisie pour correspondre à une émission d'une séquence de signaux calibrés en amplitude. Le choix d'une telle séquence est motivé par le fait que le niveau du signal reçu Rx pendant cette séquence, affecté du coefficient K0 inférieur à l'unité, peut alors représenter un seuil THRSH qui correspond à une absence de transmission de données.

Ceci constitue une caractéristique de la présente invention qui est de proposer un détecteur de perte de porteuse dont le seuil THRSH soit auto-adaptatif. On utilise pour cela le fait que, si des variations importantes peuvent se produire essentiellement entre deux communications en raison de lignes différentes, ces variations sont généralement faibles pendant une même communication.

On peut donc prévoir d'adapter le seuil THRSH du détecteur de perte de porteuse entre chaque communication et, de préférence, entre chaque page transmise.

De façon particulièrement avantageuse, on utilise des signaux déterminés qui sont émis pendant une phase d'apprentissage, présente entre chaque transmission de page de document, pour effectuer cette adaptation du seuil THRSH.

En effet, avant chaque transmission d'une page de document, une phase d'apprentissage est effectuée. Les recommandations CCITT prévoient une procédure d'apprentissage déterminée pour chaque norme de transmission en fixant le type de signaux devant être transmis et la durée maximale de la procédure d'apprentissage. Dans le cas de la norme V27, par exemple, qui correspond à une des normes utilisées pour la télécopie, une procédure d'apprentissage se divise en cinq segments.

Ces cinq segments correspondent à une émission particulière de signaux prédéterminés.

Un premier segment consiste en une porteuse pure (dépourvue de modulation) émise à la fréquence de la porteuse de transmission de données, par exemple, 1800 Hz pour la norme V27.

Un deuxième segment consiste en une absence d'émission pendant une certaine durée.

Un troisième segment consiste en un signal modulé par une fréquence donnée, en phase et en opposition de phase. Cette fréquence est, par exemple, de 1600 Hz pour la norme V27. Dans le domaine fréquentiel, cela correspond à émettre deux fréquences pures, l'une à 1000 Hz, l'autre à 2600 Hz.

Un quatrième segment consiste en un signal embrouillé aléatoire dans une plage de fréquence. Pour la norme V27, cette plage de fréquence est comprise entre 1000 et 2600 Hz.

Un cinquième segment consiste en un signal embrouillé encodé de manière prédéterminée.

L'invention propose d'utiliser le troisième segment pour réaliser l'adaptation du seuil de détection THRSH de perte de porteuse. Le choix de ce segment trois est motivé par le fait que les deux premiers segments ne sont pas toujours présents. En effet, ils ne sont présents que dans des phases d'apprentissage relatives à des modems pourvus de modules d'élimination d'écho. Quant aux quatrième et cinquième segments, ils comportent une modulation de la porteuse qui se rapproche d'une modulation par des symboles de données et se distinguent de ce fait difficilement des signaux reçus pendant la transmission d'une page de document.

Par contre, le segment trois présente l'avantage d'être déjà détecté par le modem, notamment, pour ajuster une commande automatique de gain. Ainsi on dispose déjà dans le modem d'un signal ENABLE indicateur de la présence de ce segment, provenant d'un dispositif 8 d'identification du segment trois, qui peut alors servir de signal de commande du commutateur 6 d'adaptation de seuil.

Un avantage de la présente invention est qu'en utilisant, en guise de signal de commande, un signal déjà présent dans le modem, le détecteur d'un modem existant, par exemple tel que représenté à la figure 1, peut être modifié pour obtenir un détecteur selon l'invention. En effet, l'interrupteur 6, le multiplieur 7 et le registre 5 peuvent être insérés, entre la sortie du calculateur 1 et l'entrée négative du comparateur 4, sans autre modification du détecteur tel que représenté à la figure 1.

On notera qu'une telle adaptation ne requiert pas de modification du calculateur 1 dans la mesure où le même calculateur est utilisé pour obtenir le seuil et la valeur courante.

Le choix de la valeur du coefficient K0 du multiplieur 7 dépend de la norme de transmission. On choisira pour K0, une valeur telle qu'elle représente, pour la valeur du seuil THRSH obtenue en présence du segment trois, une atténuation du niveau du signal reçu Rx qui permette de considérer qu'elle correspond à la perte de la transmission. De plus, on veillera à ce que le niveau d'atténuation obtenu soit supérieur à l'amplitude maximale des ondulations que présente la sortie du moyenneur du calculateur 1 afin d'éviter des commutations intempestives.

A titre d'exemple, on pourra choisir une atténuation de l'ordre de 6 dB pour la norme V27 ter, soit un coefficient K0 de l'ordre de 0,5. Pour la norme V27, le coefficient K0 pourra être de l'ordre de 0,25 représentant une atténuation de l'ordre de 12 dB. Pour la norme V17, le coefficient K0 pourra être de l'ordre de 0,125 représentant une atténuation de l'ordre de 18 dB.

La figure 3 représente un mode de réalisation classique d'un dispositif 8 d'identification de segment trois dont la sortie ENABLE est utilisée, selon l'invention, pour commander le commutateur 6. Ce circuit comporte un filtre passe-bande 9 et un filtre passe-bas 10 recevant, chacun, le signal Rx. Le signal Rx que reçoivent les filtres 9 et 10 correspond, comme dans le cas de la figure 2, au signal reçu par le modem après numérisation dans un convertisseur analogique/numérique (non représenté). Chaque filtre 9 ou 10 est suivi d'un calculateur d'amplitude, respectivement 11 et 12. Un comparateur 13 reçoit, sur une première entrée, la sortie d'un multiplieur 14 multipliant la sortie du calculateur 11 par un coefficient K1 et, sur une seconde entrée, la sortie d'un multiplieur 15 multipliant la sortie du calculateur 12 par un coefficient K2. La sortie du comparateur 13 fournit un signal ENABLE à deux états indiquant la présence ou l'absence du segment trois dans le signal reçu Rx. Le coefficient K1 du multiplieur 14 est approximativement le double du coefficient K2 du multiplieur 15. Pour la norme V27 ter, le filtre passe-bande 9 est un filtre étroit centré sur la fréquence de 1000 Hz et le filtre passe-bas 10 possède une fréquence de coupure de 1760 Hz.

Ainsi, lorsque le segment trois est présent, c'est-à-dire deux fréquences pures de 1000 Hz et 2600 Hz, la première entrée du comparateur 13 est à un niveau supérieur à sa seconde entrée. En effet, le double du niveau de sortie du filtre passe-bande 9 est supérieur au niveau de sortie du filtre passe-bas 10.

En présence d'un signal modulé (spectre plat entre 1000 Hz et 2600 Hz), ou de bruit sur la ligne, le niveau de sortie du filtre passe-bas 10 est supérieur au double du niveau de sortie du filtre passe-bande 9 en raison de l'étroitesse de ce dernier.

On préférera cependant, selon l'invention, avoir recours à un dispositif d'identification du segment trois qui soit fiable et rapide, même dans le cas d'une émission de segment trois de courte durée. En effet, la durée d'émission du segment trois sur la ligne de transmission dépend de la norme. Plus précisément, la durée de ce troisième segment dépend de l'option dans laquelle se trouvent les modems parmi deux options qui correspondent, respectivement, à un apprentissage initial (au début de la communication) ou à un apprentissage intermédiaire (entre chaque page). Pour la norme V27 ter, l'option d'apprentissage intermédiaire, dite option a, a une durée de 14 intervalles de symboles. L'option d'apprentissage initial, dite option b, a une durée de 50 intervalles de symboles. Les durées sont exprimées en nombres d'intervalles de symboles, ou bauds, car elles dépendent du débit en bits par seconde de la transmission, la norme V27 ter prévoyant deux vitesses de transmission (1200 bauds ou 2400 bits/s et 1600 bauds ou 4800 bits/s).

Si un détecteur classique de segment trois fonctionne correctement pour un segment trois de longue durée (par exemple, option b de la norme V27 ter qui correspond à 50 bauds, soit 31,25 ms), il ne permet pas de détecter de manière fiable le segment trois si celui-ci n'est émis que pendant une courte durée (par exemple, option a de la norme V27 ter qui correspond à 14 bauds, soit 8,75 ms). Cela est dû au temps de réponse du filtre passe-bande 1 dont la constante de temps est supérieure à 14 bauds en raison de son étroitesse.

De fait, un filtre passe-bande numérique est classiquement un filtre récursif au moins du deuxième ordre constitué à partir d'intégrateurs, de multiplieurs et d'éléments de retard (registres à décalages). La structure et le comportement d'un filtre de ce type ont été décrits par P.-M. BEAUFILS et M. RAMI dans l'ouvrage "Le filtrage numérique", pages 216 à 224.

Un inconvénient de ce type de filtre est que l'obtention d'un filtre passe-bande étroit, qui est nécessaire pour ne pas entraîner de fausses détections de segment trois, conduit à un filtre lent.

Ainsi, selon une variante de l'invention, le dispositif d'identification du segment trois, dont le signal de sortie ENABLE commande le commutateur 6, est constitué selon la représentation de la figure 4.

Comme le montre la figure 4, le dispositif de reconnaissance selon l'invention comporte un filtre coupe-bandes 16 sur lequel est envoyé le signal reçu Rx par le modem après numérisation. La sortie de ce filtre coupe-bandes 16 est envoyée sur un premier calculateur d'amplitude 11 dont la sortie est reliée à une première entrée d'un comparateur 13. Le signal reçu Rx est également envoyé, directement, sur un second calculateur d'amplitude 12 dont la sortie est reliée à une seconde entrée du comparateur 13. De préférence, un multiplieur, respectivement 14 et 15, est intercalé entre la sortie de chaque calculateur 11 et 12 et l'entrée du comparateur à laquelle il est associé. Ces multiplieurs 14 et 15 affectent chaque sortie de calculateur 11 ou 12 d'un coefficient positif et inférieur à l'unité, respectivement K1 et K2, K1 étant supérieur à K2.

Le filtre coupe-bandes 16 comporte deux fréquences de coupure qui correspondent aux deux fréquences présentes dans le segment trois, soit pour la norme V27 ter, 1000 Hz et 2600 Hz.

Un avantage de l'emploi d'un tel filtre coupe-bandes 16 est qu'il est aisément réalisable sous la forme d'un filtre numérique non récursif possédant une faible constante de temps. Cela n'est pas le cas d'un filtre passe-bande dans la mesure où un filtre non récursif ne comporte que des zéros (fréquences pour lesquelles l'atténuation est infinie). Il faudrait donc multiplier le nombre d'éléments de retard du filtre pour entourer la fréquence centrale d'une multitude de zéros (fréquences coupées) dans la mesure où l'on cherche à obtenir une fréquence non coupée déterminée, ce qui conduirait à un temps de propagation très élevé du signal dans le filtre. Par contre, pour un filtre coupe-bandes, les fréquences déterminées sont précisément des fréquences coupées, donc des zéros.

Au moyen d'un dispositif tel que représenté à la figure 4, la présence du segment trois entraîne un niveau élevé en sortie du calculateur 12 qui reçoit le signal Rx en direct, et un très faible niveau en sortie du calculateur 11 dans la mesure où les deux fréquences ont été coupées par le filtre 16. Le bruit susceptible d'être mélangé au signal reçu Rx est ici sans incidence dans la mesure où sa contribution est pratiquement la même sur les deux calculateurs 11 et 12 car les filtres coupe-bandes sont relativement étroits.

En l'absence du segment trois, c'est-à-dire en présence d'un signal modulé, de bruit ou d'un segment trois d'une autre norme de transmission, les sorties des deux calculateurs 11 et 12 sont sensiblement aux mêmes niveaux.

Les calculateurs d'amplitude 11 et 12 (figure 3 ou 4) sont, comme le calculateur 1 (figure 2), constitués d'un circuit de détermination de la valeur absolue de l'amplitude du signal reçu et d'un filtre numérique passe-bas récursif du premier ordre à fréquence de coupure nulle constituant un moyenneur.

Un avantage du circuit de détermination tel que représenté à la figure 4 est que, dans la conception d'un récepteur d'un modem, les calculateurs 1 (figure 2) et 11 (figure 4) peuvent être confondus. En effet, ils reçoivent le même signal (le signal reçu après numérisation) et délivrent la même information (une valeur moyenne de la valeur absolue de l'amplitude du signal reçu).

Les coefficients des multiplieurs 14 et 15 sont, de préférence, choisis pour que le niveau de sortie du calculateur 12 soit divisé par deux par rapport au niveau de sortie du calculateur 11. Cela permet de différencier aisément les deux cas possibles au niveau du comparateur 13, une des deux entrées du comparateur (la première en l'absence du segment trois, la seconde en présence du segment trois) ayant alors toujours un niveau supérieur à l'autre.

Ainsi, à chaque apparition d'un segment trois, on adapte le seuil THRSH du comparateur 4 qui servira à détecter la fin de la page suivante du document transmis. On dispose donc d'un détecteur de perte de porteuse particulièrement fiable, même en cas de variations des caractéristiques de la ligne durant la transmission d'un document.

On veillera cependant à choisir la constante de temps du moyenneur 3 pour qu'elle permette, à la fois, un calcul suffisamment rapide de l'amplitude du signal reçu pendant que le segment trois est présent et un respect de la contrainte relative à l'amplitude maximale des ondulations de la sortie du moyenneur, afin d'éviter de provoquer une fausse détection.

Bien entendu, la présente invention est susceptible de diverses variantes et modifications qui apparaîtront à l'homme de l'art. En particulier, chacun des composants décrits pourra être remplacé par un ou plusieurs éléments remplissant la même fonction.

De plus, alors que certaines des explications précédentes ont été données par soucis de clarté en utilisant un vocabulaire qui correspond parfois à un fonctionnement analogique, il sera clair pour l'homme du métier que tous les éléments du circuit selon la présente invention traitent des signaux numériques et que les constituants du circuit illustrés sous forme matérielle pourront correspondre en pratique à des réalisations logicielles.

## Revendications

1. Détecteur de perte de porteuse dans un modem récepteur d'une transmission d'un document par télécopie, comportant :
un premier calculateur d'amplitude (1) du signal reçu (Rx),
un premier comparateur (4) de cette amplitude par rapport à un seuil (THRSH), et
des moyens (5, 6, 7, 8) pour réaliser une adaptation dudit seuil (THRSH) entre chaque page du document transmis.

2. Détecteur de perte de porteuse selon la revendication 1, caractérisé en ce que lesdits moyens comportent un registre (5) de mémorisation d'un seuil (THRSH) qui correspond à un niveau d'amplitude du signal reçu (Rx) pendant une séquence de signaux déterminés et un commutateur (6) destiné à commander la mémorisation de l'amplitude du signal reçu (Rx) issue du premier calculateur (1) à l'apparition de la séquence de signaux déterminés, ladite séquence étant choisie pour présenter des signaux d'amplitude calibrée.

3. Détecteur de perte de porteuse selon la revendication 2, caractérisé en ce que le niveau d'amplitude devant être mémorisé est affecté d'un coefficient (K0), inférieur à l'unité, au moyen d'un premier multiplieur (7) intercalé entre une sortie du premier calculateur (1) et une entrée de mémorisation du registre (5).

4. Détecteur de perte de porteuse selon la revendication 3, caractérisé en ce que la valeur du coefficient multiplicateur (K0) est choisie pour que la valeur du seuil (THRSH) mémorisé soit atténuée, par rapport à la sortie du premier calculateur (1), d'une valeur correspondant au moins à l'amplitude maximale d'ondulations que peut présenter la sortie du premier calculateur (1).

5. Détecteur de perte de porteuse selon l'une quelconque des revendications 2 à 4, caractérisé en ce qu'il est associé à un dispositif d'identification (8) de la séquence de signaux déterminés, qui délivre un signal de commande (ENABLE) audit commutateur (6), ladite séquence possédant un spectre fréquentiel de deux fréquences déterminées.

6. Détecteur de perte de porteuse selon la revendication 5, caractérisé en ce que ledit dispositif d'identification (8) comporte un filtre passe-bande (9), associé à un second calculateur d'amplitude (11) dont une sortie est envoyée, par l'intermédiaire d'un second multiplieur (14), sur une première entrée d'un second comparateur (13), et un filtre passe-bas (10), associé à un troisième calculateur d'amplitude (12) dont une sortie est envoyée, par l'intermédiaire d'un troisième multiplieur (15), sur une seconde entrée du second comparateur (13).

7. Détecteur de perte de porteuse selon la revendication 5, caractérisé en ce que ledit dispositif d'identification (8) comporte un filtre coupe-bandes (16), associé à un second calculateur d'amplitude (11) dont une sortie est envoyée sur une première entrée d'un second comparateur (13), une seconde entrée du second comparateur (13) recevant la sortie d'un troisième calculateur d'amplitude (12) dont l'entrée reçoit, directement, ledit signal reçu (Rx).

8. Détecteur de perte de porteuse selon la revendication 7, caractérisé en ce qu'un multiplieur (14, 15), par un coefficient prédéterminé (K1, K2), est intercalé entre la sortie de chaque calculateur (11, 12) du dispositif d'identification (8) et l'entrée du second comparateur (13) à laquelle ledit calculateur (11, 12) est associé.

9. Détecteur de perte de porteuse selon l'une des revendications 6 ou 8, caractérisé en ce que le coefficient (K1) du multiplieur (14) associé au second calculateur (11) est supérieur au coefficient (K2) du multiplieur (15) associé au troisième calculateur (12).

10. Détecteur de perte de porteuse selon l'une quelconque des revendications 1 à 9, caractérisé en ce que chaque calculateur d'amplitude (1, 11, 12) comprend un circuit (2) de détermination de la valeur absolue de l'amplitude du signal reçu (Rx) et, constituant un moyenneur (3), un filtre numérique passe-bas récursif du premier ordre à fréquence de coupure nulle.

## Patentansprüche

1. Trägerverlustdetektor in einem Modem-Empfänger einer Faxübertragung eines Dokuments, mit folgenden Merkmalen:
eine erste Vorrichtung zum Berechnen der Amplitude (1) eines empfangenen Signals (Rx),
ein erster Vergleicher (4) dieser Amplitude im Verhältnis zu einem Schwellwert (THRSH) und
Mittel (5, 6, 7, 8) zum Realisieren einer Adaption dieses Schwellwertes (THRSH) zwischen einzelnen Seiten des übertragenen Dokuments.

2. Trägerverlustdetektor nach Anspruch 1, dadurch **gekennzeichnet**, daß die Mittel ein Register (5) zum Speichern eines Schwellwertes (THRSH), der einem Amlitudenwert des empfangenen Signals (Rx) während einer Folge von ermittelten Signalen entspricht, und einen Schalter (6) zum Steuern der Speicherung der Amplitude des empfangenen Signals (Rx), das von der ersten Rechenvorrichtung (1) beim Auftreten der Folge aus ermittelten Signalen ausgegeben wird, aufweisen, wobei diese Folge so gewählt wird, daß sie kalibrierte Amplitudensignale darstellt.

3. Trägerverlustdetektor nach Anspruch 2, dadurch **gekennzeichnet**, daß dem zu speichernden Amplitudenpegel über einen ersten Multiplizierer (7), der zwischen einem Ausgang der ersten Rechenvorrichtung (1) und einem Speichereingang des Registers (5) liegt, ein Koeffizient (KO) zugewiesen wird, der kleiner als 1 ist.

4. Trägerverlustdetektor nach Anspruch 3, dadurch **gekennzeichnet**, daß der Wert des Multiplikationskoeffizienten (KO) so gewählt wird, daß der Wert des gespeicherten Schwellwertes (THRSH) im Verhältnis zu dem Ausgang der ersten Rechenvorrichtung (1) um einen Wert gedämpft wird, der wenigstens der maximalen Wellenamplitude entspricht, die am Ausgang der ersten Rechenvorrichtung (1) auftreten kann.

5. Trägerverlustdetektor nach einem der Ansprüche 2 bis 4, dadurch **gekennzeichnet**, daß sie eine Vorrichtung zum Identifizieren (8) der Folge der ermittelten Signale aufweist, die ein Steuersignal (ENABLE) an den Schalter (6) ausgibt, wobei die Folge ein Frequenzspektrum mit zwei ermittelten Frequenzen aufweist.

6. Trägerverlustdetektor nach Anspruch 5, dadurch **gekennzeichnet**, daß die Identifikationsvorrichtung (8) ein Bandpassfilter (9) aufweist, das einer zweiten Amplitudenrechenvorrichtung (11) zugeordnet ist, der ein Ausgangssignal über einen zweiten Multiplizierer (14) zu einem ersten Eingang des zweiten Vergleichers (13) geschickt wird, sowie ein Tiefpassfilter (10), das einer dritten Amplitudenrechenvorrichtung (12) zugeordnet ist, deren Ausgangssignal über einen dritten Multiplizierer (15) an einen zweiten Eingang des zweiten Vergleiches (13) gesendet wird.

7. Trägerverlustdetektor nach Anspruch 5, dadurch **gekennzeichnet**, daß die Identifikationsvorrichtung (8) Kerbfilter (16) aufweist, das einer zweiten Amplitudenrechenvorrichtung (11) zugeordnet ist, von der ein Ausgangssignal zu einem ersten Eingang eines zweiten Vergleiches (13) gesendet wird, wobei ein zweiter Eingang des zweiten Vergleiches (13) das Ausgangssignal einer dritten Amplitudenrechenvorrichtung (12) empfängt, deren Eingang das von dem Modem empfangene Signal (Rx) direkt empfängt.

8. Trägerverlustdetektor nach Anspruch 7, dadurch **gekennzeichnet**, daß ein Multiplizierer (14, 15) mit einem vorgegebenen Koeffizienten (K1, K2) zwischen den Ausgang jeder Rechenvorrichtung (11, 12) der Identifikationsvorrichtung (8) und den Eingang des zweiten Vergleiches (13), dem diese Rechenvorrichtung (11, 12) zugeordnet ist, geschaltet ist.

9. Trägerverlustdetektor nach einem Ansprüche 6 bis 8, dadurch **gekennzeichnet**, daß der Koeffizient (Kl) des Multiplizierers (14), welcher der zweiten Rechenvorrichtung (11) zugeordnet ist, größer ist als der Koeffizient (K2) des Multiplizierers (15), der der dritten Rechenvorrichtung (12) zugeordnet ist.

10. Trägerverlustdetektor nach einem der Ansprüche 1 bis 9, dadurch **gekennzeichnet**, daß jede Amplitudenrechenvorrichtung (1, 11, 12) eine Schaltung (2) zum Ermitteln des Absolutwertes der Amplitude des empfangenen Signals (Rx) und ein rekursives, digitales Tiefpassfilter erster Ordnung mit einer Sperrfrequenz von Null, welches eine Mittelungseinrichtung (3) bildet, aufweist.

## Claims

1. A carrier loss detector in a modem receiver of the transmission of a document by fax, comprising
a first calculation circuit (1) of the magnitude of the receive signal (Rx),
a first comparator (4) of said magnitude with respect to a threshold ( THRSH), and
means (5, 6, 7, 8) for achieving an adaptation of said threshold (THRSH) between each page of the transmitted document.

2. A carrier loss detector according to claim 1, characterized in that said means include a register (5) for memorizing a threshold (THRSH) which corresponds to a magnitude level of the receive signal (Rx) during a sequence of determined signals, and a switch (6) for controlling the storage of the magnitude of the receive signal (Rx) from the first calculation circuit (1) when the sequence of determined signals occurs, said sequence being selected to exhibit signals sized in amplitude.

3. A carrier loss detector according to claim 2, characterized in that a coefficient (KO) lower than 1 is assigned to the magnitude level to be stored, by means of a first multiplier (7) interposed between an output of the first energy calculation circuit (1) and a memorization input of the register (5).

4. A carrier loss detector according to claim 3, characterized in that the value of the multiplying coefficient (KO) is selected so that the value of the memorized threshold (THRSH) be attenuated with respect to the output of the first calculation circuit (1) by a value corresponding at least to the maximum ripple amplitude exhibited by the output of the first calculation circuit (1).

5. A carrier loss detector according to any of claims 2 to 4, characterized in that it includes a device (8) for identifying the sequence of determined signals, which issues a control signal (ENABLE) to said switch (6), said sequence having a frequency spectrum of two determined frequencies.

6. A carrier loss detector according to claim 5, characterized in that said identification device (8) includes a band-pass filter (9), associated with a second magnitude calculation circuit (11), an output of which is sent via a second multiplier (14) on a first input of a second comparator (13), and a low-pass filter (10), associated with a third magnitude calculation circuit (12), an output of which is sent via a third multiplier (15) on a first input of the second comparator (13).

7. A carrier loss detector according to claim 5, characterized in that said identification device (8) includes a notch filter (16), associated with a second magnitude calculation circuit (11), an output of which is sent on a first input of a second comparator (13), a second input of the second comparator (13) receiving the output of a third magnitude calculation circuit (12), the input of which directly receives the signals (Rx) received by the modem.

8. A carrier loss detector according to claim 7, characterized in that a multiplier (14, 15), by a predetermined coefficient (K1, K2), is interposed between each output of a calculation circuit (11, 12) of the identification device (8) and the input of the second comparator (13) with which said calculation circuit (11, 12) is associated.

9. A carrier loss detector according to any of claims 6 to 8, characterized in that the coefficient (K1) of the multiplier (14) associated with the second calculation circuit (11) is greater than the coefficient (K2) of the multiplier (15) associated with the third energy calculation circuit (12).

10. A carrier loss detector according to any of claims 1 to 9, characterized in that each magnitude calculation circuit (1, 11, 12) comprises a circuit (2) for determining the absolute value of the magnitude of the received signal (Rx) and, constituting an averager (3), a low-pass recursive digital filter of the first order having a null cut off frequency.
